# EUROPÄISCHE PATENTSCHRIFT

(11) **EP 4 650 279 B1**
(45) Veröffentlichungstag und Bekanntmachung des Hinweises auf die Patenterteilung: **12.08.2026**
(21) Anmeldenummer: 25175669.8
(22) Anmeldetag: 12.05.2025
(51) Int. Cl.: B64G 5/00, B65D 88/00, B67D 7/84

(54) **MOBILE WASSERSTOFFPEROXID-VERSORGUNGSEINHEIT**
MOBILE HYDROGEN PEROXIDE SUPPLY UNIT
UNITÉ MOBILE D'ALIMENTATION EN PEROXYDE D'HYDROGÈNE

(30) Priorität: 17.05.2024 DE 102024113887
(43) Veröffentlichungstag der Anmeldung: 19.11.2025
(73) Patentinhaber: Deutsches Zentrum für Luft- und Raumfahrt e.V., 53227 Bonn (DE)
(72) Erfinder: May, Stefan, 38108 Braunschweig (DE); Bierwagen, Nora Magdalena, 38108 Braunschweig (DE); Poppe, Georg, 38108 Braunschweig (DE); Glaser, Christopher Karl, 38108 Braunschweig (DE)
(74) Vertreter: REHBERG HÜPPE + PARTNER

(56) Entgegenhaltungen:
- CN-A- 104 891 410
- CN-A- 112 897 443
- CN-U- 216 273 096
- US-A- 2 855 126
- US-A1- 2023 391 543

## Beschreibung

### TECHNISCHES GEBIET DER ERFINDUNG

Die vorliegende Erfindung bezieht sich auf eine mobile Wasserstoffperoxid-Versorgungseinheit. Insbesondere betrifft die vorliegende Erfindung eine mobile Wasserstoffperoxid-Versorgungseinheit, die zur Betankung einer Rakete mit Wasserstoffperoxid oder High-Test-Peroxid (HTP) verwendet werden kann.

### STAND DER TECHNIK

Die Nachfrage nach einem kostengünstigen Zugang zum Weltraum hat in den letzten Jahren ständig zugenommen, was dazu geführt hat, dass immer mehr Weltraumhäfen geplant oder bereits vorhanden sind, um die Nachfrage zu befriedigen. Vor allem die polaren Umlaufbahnen, die häufig von Start-ups für Kleinstraketen angezielt werden, erfordern keine Startplätze in Äquatornähe, so dass sich das Spektrum der möglichen Standorte für Weltraumhäfen erweitert. Die zunehmenden Startaktivitäten geben jedoch Anlass zur Sorge über die Auswirkungen der Raumfahrt auf die Umwelt, was zu einer verstärkten Forschung im Bereich umweltfreundlicher Treibstoffe geführt hat. High-Test-Peroxid (HTP) wird allgemein als vielversprechende umweltfreundliche Alternative für Oberstufen- und Weltraumanwendungen angesehen. Dennoch fehlt es den meisten der derzeitigen Startanlagen an einer zuverlässigen und sicheren Infrastruktur für die Durchführung von Starts, bei denen Wasserstoffperoxid benötigt wird, entweder in der Trägerrakete oder in dem Satellit / den Satelliten.

Wasserstoffperoxid ist zwar seit 1818 bekannt, wurde aber nur in den Anfängen der Raumfahrt für Raketenantriebe verwendet, bevor sich Hydrazin als Referenz etablierte. Dies ist zum Teil auf die geringere Stabilität von Wasserstoffperoxid in früheren Entwicklungsstadien zurückzuführen. In der Tat leidet Wasserstoffperoxid an einer unvorteilhaften Dokumentation in der viel zitierten Literatur, z. B. in J. D. Clark, "Ignition! An informal history of liquid rocket propellants", Rutgers University Press, 1972. Tragische U-Boot-Unfälle mit Wasserstoffperoxid-getriebenen Torpedos und die allgemeine Missachtung der Toxizität und Karzinogenizität von Hydrazin in den frühen Jahren der Weltraumforschung führten zu Aussagen wie: "[...] viele Leute, mich selbst (besonders) eingeschlossen, neigten dazu, Peroxid zweifelnd zu betrachten und es auf der anderen Seite zu umgehen", *supra.* Dieses Zitat wurde bis zum März 2024 mindestens 285 Mal zitiert.

Jüngste Entwicklungen bei der Lagerfähigkeit, Reinheit und Stabilität von HTP haben sein Potenzial für den Einsatz in der Raumfahrt erheblich gesteigert. In der Tat haben sich Lagerfähigkeit, Reinheit und Stabilität von Wasserstoffperoxid in den letzten Jahren erheblich verbessert. So wurde z. B. 90 %iges H₂O₂ bei 5 Grad Celsius 17 Jahre lang gelagert, ohne dass es zu einer nennenswerten Zersetzung kam (gemessene Konzentration von 90,5 % nach 17 Jahren), siehe M. Ventura, "Long Term Storability of Hydrogen Peroxide", in 41st AIAA/ASMA/SAE/ASEE Joint Propulsion Conference & Exhibit, July 10-13,2005, Tuscon Arizona. Selbst Trägerraketen auf der Startrampe konnten H₂O₂ mehrere Monate bis Jahre lang mit einem Aktivsauerstoffverlust von weniger als 0,32 % pro Jahr speichern. Im Wesentlichen hat sich die Lagerfähigkeit von H₂O₂ von 1965 bis 2005 um den Faktor 2-10 erhöht. Andererseits hat die jüngste Konzentration auf umweltfreundlichere Treibstoffe das Interesse an Wasserstoffperoxid als umweltfreundliches und dennoch leistungsstarkes Oxidationsmittel für Weltraumanwendungen neu entfacht. Die Anwendungen reichen von Eintreibstoff-(Monopropellant-)Triebwerken und Zweitreibstoff-(Bipropellant-)Systemen (insbesondere als Ersatz für das hochgiftige Hydrazin) bis hin zu Hybrid-Raketenmotoren.

In der Raumfahrt wird HTP hauptsächlich als Monopropellant, Bipropellant oder in Hybridraketen eingesetzt, und in jüngster Zeit wurden einige Forschungsarbeiten zu Wasserstoffperoxid-Anwendungen für Feststoffraketenmotoren durchgeführt, siehe W. Kopacz, A. Okninski, A. Kasztankiewicz, P. Nowakowski, G. Rarata und P. Maksimowski, "Hydrogen peroxide - A promising oxidizer for rocket propulsion and its application in solid rocket propellants," FirePhysChem, Bd. 2, S. 56-66, März 2022. Die Ursprünge von Wasserstoffperoxid für Treibstoffanwendungen liegen im raketenunterstützten Start der Heinkel He 167 und dem Gasgenerator der V2-Rakete, siehe E. Wernimont, M. Ventura, G. Garboden und P. Mullens, "Past and present uses of rocket grade hydrogen peroxide", in 2nd International Hydrogen Peroxide Propulsion Conference, November 7-10, 1999, Purdue University, Lafayette, Indiana.

Bemerkenswert ist, dass der spezifische Impuls (Iₛₚ) von HTP (98 %) als Monopropellant nur 20 % niedriger ist als der des krebserregenden und hochgiftigen Hydrazins, siehe A. E. S. Nosseir, A. Cervone und A. Pasini, "Review of State-of-the-Art Green Monopropellants: For Propulsion Systems Analysts and Designers", Luft- und Raumfahrt, Bd. 8, S. 20, Jan. 2021. Bei Bipropellant-Systemen, zum Beispiel mit Ethanol als Brennstoff, sind Iₛₚ-Werte über 325 s möglich, siehe A. Mayer und W. Wieling, "Green Propulsion Research at TNO the Netherlands", Transactions on Aerospace Research, Bd. 2018, S. 7-30, Dez. 2018. Tatsächlich ist die Zündung von HTP mit Ethanol oder Propin unter Verwendung eines Katalysators hypergolisch, was HTP zu einem wettbewerbsfähigen Treibstoff für Raumfahrtantriebe macht. Sogar ein Mehrbetriebssystem, bei dem HTP sowohl als Mono- als auch als Bipropellant verwendet wird, ist denkbar. Für Hybridantriebe ist HTP eine vielversprechende Lösung, da seine katalytische Zündung die Komplexität begrenzt und eine einfachere Wiederzündung und sogar Drosselung im gepulsten Betrieb ermöglicht. Darüber hinaus ermöglicht das hohe optimale Oxidationsmittel-KraftstoffVerhältnis kleinere Brennkammern, da weniger Kraftstoffdurchfluss erforderlich ist. Dies verringert die Probleme, die mit der Vergrößerung des Strömungsquerschnitts und der Geometrie des Brennstoffblocks bei Hybridraketentriebwerken verbunden sind. Was die Anwendung in Festbrennstoffen betrifft, so kann Wasserstoffperoxid als kryogener Festbrennstoff oder in Festbrennstoffen mit HTP-Kapselung verwendet werden.

Der Start von Raketen oder Satelliten mit HTP kann aufgrund der erforderlichen Infrastruktur eine Herausforderung darstellen. Für große Startanlagen wie das Guiana Space Center, Cape Canaveral oder das Kennedy Space Center, die für die Handhabung von Flüssigtreibstoffen gut ausgerüstet sind, ist die Verwendung von Wasserstoffperoxid möglicherweise kein unlösbares Problem. Das Raumfahrtzentrum von Guayana verfügt sogar über eine gute Infrastruktur für Wasserstoffperoxid, da dort die Sojus ST-Triebwerke mit den Triebwerken RD-107A und RD-108A gestartet werden, die Wasserstoffperoxid für ihren Gasgeneratorzyklus verwenden, siehe M. Ferlin, "Safety Evaluation and Experience of Hydrogen Peroxide in Launchers Domain at Guiana Space Centre," in Space Safety is No Accident (T. Sgobba und I. Rongier, Hrg.), (Cham), S. 169-178, Springer International Publishing, 2015. Die umfangreichen Ausrüstungen und Infrastrukturen, die im Guiana Space Center bis 2011 für die HTP für Sojus ST erforderlich waren (z. B. Lagerbereich, Transferbereich, Entladebereich und Neutralisierungsbereich), verdeutlichen jedoch die großen Schritte, die selbst große und erfahrene Startanlagen unternehmen müssen, um HTP Rechnung zu tragen.

Abgesehen von großen Standorten wie dem Guiana Space Center verfügen kleinere Startanlagen, die häufig von Start-ups in der NewSpace-Wirtschaft ins Auge gefasst werden, nicht über umfangreiche Wasserstoffperoxid-Infrastrukturen. Dies behindert das kontinuierliche Wachstum von Wasserstoffperoxid im Raumfahrtbereich. An diesen Startplätzen werden traditionell Feststoffraketenmotoren gestartet, bei denen kein Flüssigbrennstoff nachgefüllt werden muss (außer bei Nutzlasten mit flüssigen Komponenten). Die Probleme, die sich aus einer begrenzten oder nicht vorhandenen Wasserstoffperoxid-Infrastruktur ergeben, lassen sich gut am Beispiel der Starts der Nucleus-Höhenforschungsrakete von Nammo, siehe M. Faenza, A. J. Boiron, B. Haemmerli und C. J. Verberne, "The Nammo Nucleus Launch: Norwegian Hybrid Sounding Rocket over 100km," AIAA Propulsion and Energy Forum, American Institute of Aeronautics and Astronautics, Aug. 2019, und der Amber 2k des Lukasiewicz Research Network-Institute of Aviation veranschaulichen, siehe A. Okninski, P. Surmacz, B. Bartkowiak, T. Mayer, K. Sobczak, M. Pakosz, D. Kaniewski, J. Matyszewski, G. Rarata und P. Wolanski, "Development of Green Storable Hybrid Rocket Propulsion Technology Using 98% Hydrogen Peroxide as Oxidizer", Aerospace, Bd. 8, S. 234, Sept. 2021.

2018 startete Nammo die mit HTPB und H₂O₂ betankte Höhenforschungsrakete Nucleus vom Weltraumbahnhof Andoya. Nucleus erreichte eine Höhe von 107,4 km. Um die Höhenforschungsrakete starten zu können, ließ Nammo das HTP direkt vom Lieferanten zum Startplatz liefern, wo es in einen mobileren Tank umgefüllt werden musste, mit dem schließlich die Rakete befüllt wurde. Obwohl das Betankungskonzept im Allgemeinen gut durchdacht war, bestand bei jeder Betankungsphase das Risiko einer Verunreinigung des HTP und von Unfällen mit dem HTP. Nach der Betankung des Oxidationstanks von Nucleus wurde dieser über den GSE-Container von Nammo, der einen Druckkreislauf enthielt, ferngesteuert mit 350 bar Helium unter Druck gesetzt und zum Startplatz transportiert. Der Container kann auch als Werkstatt genutzt werden.

Das zweite Beispiel ist die ILR-33 Amber-Rakete des Lukasiewicz Research Network-Institute of Aviation (ILOT). Seit 2017 wurden drei Flüge der ursprünglichen Version Amber durchgeführt, und die neue Version Amber 2k wurde 2022 gestartet, siehe "The first flight tests of the 2k version of the amber suborbital rocket and the wr-2 mobile rocket launch pad" https://ilot.lukasiewicz.gov.pl/en/the-first-flight-tests-of-the-2k-version-of-the-amber-suborbital-rocket-and-the-wr-2-mobile-rocket-launch-pad/. ILOT ist nicht auf Startplätze angewiesen, sondern hat seine eigene mobile WR-2 Suborbitalrakete entwickelt. Der HTP wird zum Startplatz transportiert, und die Rakete wird mit einer speziellen mobilen Anlage befüllt. Auch hier ist diese zusätzliche Infrastruktur für Anwendungen erforderlich, die HTP verwenden.

In diesem Zusammenhang sei erwähnt, dass das britische Start-up-Unternehmen Skyrora eine HTP/Kerosin-Kombination für seine Triebwerke verwendet, siehe "Mobile launch complex". https://skyrora.com/product/skyrora-xl/. Die Technologie von Skyrora ist von der BLACK ARROW-Rakete (1960-1971) inspiriert, siehe E. Wernimont, M. Ventura, G. Garboden und P. Mullens, "Past and present uses of rocket grade hydrogen peroxide", in 2nd International Hydrogen Peroxide Propulsion Conference, November 7-10, 1999, Purdue University, Lafayette, Indiana, die als erste britische Rakete eine Nutzlast in die Umlaufbahn transportierte. Skyrora versucht, die Probleme der Wasserstoffperoxid-Infrastruktur (neben anderen) durch den Einsatz eines mobilen Startkomplexes zu lösen: Der modulare Aufbau ermöglicht den Transport der notwendigen Ausrüstung einschließlich der Startrampe in 40-Fuß-ISO-Containern. Dazu gehören eine Kommandozentrale, ein Druckgassystem, ein Brennstoff- und Oxidationsmittel-Füllsystem, ein mobiles Kraftwerk und ein mobiler Startkomplex. Mit diesem Ansatz kann Skyrora theoretisch von vielen Orten aus starten, ohne auf die Infrastruktur des Weltraumbahnhofs angewiesen zu sein. Skyrora versuchte 2022 einen ersten suborbitalen Start, der aufgrund einer Softwareanomalie fehlschlug.

Dokument US 2 855 126 A offenbart eine mobile Wasserstoffperoxid-Versorgungseinheit mit einem Gehäuse, einem in dem Gehäuse enthaltenen Tankraum, mindestens einem Montagepunkt für ein Wasserstofperoxid-Transport- und -Lagerfass innerhalb des Tankraums, einer in dem Tankraum befindlichen Dosierpumpe und einer in dem Tankraum befindlichen Quelle für destilliertes Wasser.

### AUFGABE DER ERFINDUNG

Ziel der vorliegenden Erfindung ist es, eine kompaktere mobile Wasserstoffperoxid-Versorgungseinheit zur Verfügung zu stellen, die auf einfache Weise zur Betankung von Raketen an Startplätzen verwendet werden kann, welche über keine HTP-Infrastruktur verfügen.

### LÖSUNG

Gemäß der vorliegenden Erfindung wird die Aufgabe der Erfindung durch die Merkmale des unabhängigen Anspruchs 1 gelöst.

Bevorzugte Ausführungsformen der Erfindung sind in den abhängigen Ansprüchen definiert.

### BESCHREIBUNG DER ERFINDUNG

Die vorliegende Erfindung betrifft eine mobile Wasserstoffperoxid-Versorgungseinheit mit einem Gehäuse und einem in dem Gehäuse enthaltenen Tankraum, der mit Wasserstoffperoxidverträglichen Edelstahlelementen ausgekleidet ist. In dem Tankraum befindet sich mindestens ein Montagepunkt für ein Wasserstoffperoxid-Transport- und -Lagerfass. Ferner befindet sich in dem Tankraum eine Dosierpumpe, die fluidisch zwischen einem Wasserstoffperoxid-Eingang des mindestens einen Montagepunktes, an den das Wasserstoffperoxid-Transport- und -Lagerfass fluidisch angeschlossen werden kann, und einem Wasserstoffperoxid-Ausgang, an den eine Wasserstoffperoxid-Versorgungsleitung, deren Ausgabeende sich außerhalb des Gehäuses befindet, fluidisch angeschlossen werden kann, angeschlossen ist. Weiterhin befindet sich innerhalb des Tankraums eine Reinstwasserquelle, die mit mindestens einem der Wasserstoffperoxid-Eingänge, der Dosierpumpe, dem Wasserstoffperoxid-Ausgang und der Wasserstoffperoxid-Versorgungsleitung fluidisch verbunden oder verbindbar ist.

Mit dem Tankraum sieht die mobile Wasserstoffperoxid-Versorgungseinheit der vorliegenden Erfindung eine Art Reinraum zur Lagerung des Wasserstoffperoxids, das HTP sein kann, vor. Neben dem Wasserstoffperoxid-Transport- und -Lagerfass enthält der Tankraum die Dosierpumpe und die Reinstwasserquelle und hält diese sauber. Die Reinstwasserquelle wiederum steht zur Verfügung, um alle Wasserstoffperoxid haltenden und führenden Einrichtungen mit Reinstwasser zu spülen. Der mindestens eine Montagepunkt für ein Wasserstoffperoxid-Transport- und -Lagerfass ist nicht nur für die fluidische Verbindung des jeweiligen Wasserstoffperoxid-Transport- und -Lagerfasses mit der Dosierpumpe vorgesehen, sondern auch, um es zu montieren, d. h. für den sicheren Halt beim Transport der mobilen Wasserstoffperoxid-Versorgungseinheit.

Vorzugsweise können in dem Tankraum 3 bis 8 oder 4 bis 6 oder 5 Montagepunkte für Wasserstoffperoxid-Transport- und -Lagerfässer vorhanden sein. Befinden sich fünf zertifizierte 220-Liter-Peroxid-Transport- und -Lagerfässer in dem Tankraum, fassen sie insgesamt 1.100 Liter Wasserstoffperoxid oder HPT. Jeder Montagepunkt kann mit einem Gewichtssensor ausgestattet sein, um die Restfüllung des jeweiligen Wasserstoffperoxid-Transport- und - Lagerfasses zu überwachen. Außerdem kann jeder Montagepunkt mit einem Temperatursensor zur Überwachung der Temperatur des Wasserstoffperoxids in dem jeweiligen Fass ausgestattet sein.

Die Reinstwasserquelle kann das Reinstwasser aus einem in dem Tankraum befindlichen Reinstwassertank bereitstellen. Vorzugsweise besteht die Reinstwasserquelle aus einem Reinstwassersystem, das angeliefertes Wasser beliebiger Qualität zu Reinstwasser aufbereitet. Solche Reinstwassersysteme sind als solche bekannt. Die maximale Kapazität des Reinstwassersystems kann in einem typischen Bereich von 500 Litern pro Stunde bis 2.000 Litern pro Stunde oder etwa 1.000 Litern pro Stunde liegen.

Die Dosierpumpe kann eine maximale Kapazität im Bereich von 250 Litern pro Stunde bis 1.000 Litern pro Stunde oder von etwa 500 Litern pro Stunde haben, gemessen bei einer Versorgungsstrecke durch die Wasserstoffperoxid-Versorgungsleitung von 150 Metern mit einer Gesamtförderhöhe von 10 Metern.

Der Tankraum wird vorzugsweise durch eine Klimaanlage, besonders bevorzugt durch eine heizungsunterstützte Klimaanlage, temperiert. Außerdem sollte der Tankraum vollständig wärmeisoliert sein.

Aus Sicherheitsgründen sollte die mobile Wasserstoffperoxid-Versorgungseinheit ein Belüftungssystem umfassen, das so konfiguriert ist, dass die Konzentration von gasförmigem Wasserstoffperoxid in dem Tankraum reguliert wird. Ferner sollte die mobile Wasserstoffperoxid-Versorgungseinheit ein automatisches optisches und akustisches Gefahrenwarnsystem umfassen.

Ebenfalls aus Sicherheitsgründen kann eine Auffangwanne den gesamten Boden des Tankraums abdecken, um verschüttetes Wasserstoffperoxid zurückzuhalten. Außerdem kann die mobile Wasserstoffperoxid-Versorgungseinheit mit einem Notfallfässerflutungssystem ausgestattet sein. Um einen gefährlichen Überdruck in dem Tankraum zu vermeiden, kann die mobile Wasserstoffperoxid-Versorgungseinheit mindestens ein Druckentlastungsventil oder einen Druckentlastungsbereich in einer Wand des Gehäuses aufweisen.

Alle Sensoren der mobilen Wasserstoffperoxid-Versorgungseinheit sind vorzugsweise für eine Fernüberwachung ausgelegt, und ein Betankungssystem der mobilen Wasserstoffperoxid-Versorgungseinheit, das die Dosierpumpe und optionale Ventile umfasst, ist vorzugsweise für eine Fernsteuerung ausgelegt.

Das Gehäuse der mobilen Wasserstoffperoxid-Versorgungseinheit ist vorzugsweise ein einzelner 20-Fuß-Intermodalcontainer nach ISO 668. Diese Container lassen sich leicht und kostengünstig als Standardfracht umschlagen.

Das Gehäuse der mobilen Wasserstoffperoxid-Versorgungseinheit kann weiterhin einen von dem Tankraum dauerhaft getrennten Technikraum und ein in dem Technikraum installiertes Druckversorgungssystem enthalten. Das Druckversorgungssystem kann beispielsweise aus einem zweistufigen Kompressor bestehen und ist vorzugsweise so ausgelegt, dass es einen maximalen Tankdruck in dem Bereich von 60 bis 120 kPa bereitstellt. Zumindest diese maximalen Drücke sollten mit Inertgasen verfügbar sein, die von außen aus einem Gasreservoir mit einem Druck in dem Bereich von 10 bis 40 kPa zugeführt werden. Ferner kann das Druckversorgungssystem so konfiguriert sein, dass es fernüberwacht und -gesteuert werden kann.

Ein externer Teil der Klimaanlage kann in dem Maschinenraum untergebracht werden. Ferner kann eine Notduscheinrichtung der mobilen Wasserstoffperoxid-Versorgungseinheit, die zum Anschluss an die Reinstwasserquelle ausgebildet und an der Außenseite des Gehäuses angebracht wird, bis zu ihrer tatsächlichen Verwendung in dem Technikraum aufbewahrt werden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Wasserstoffperoxid-Transport- und -Lagerfass die Rede ist, ist dies so zu verstehen, dass genau ein Wasserstoffperoxid-Transport- und -Lagerfass, zwei Wasserstoffperoxid-Transport- und -Lagerfässer oder mehrere Wasserstoffperoxid-Transport- und -Lagerfässer vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER ZEICHNUNGEN

Im Folgenden wird die Erfindung anhand der in den Zeichnungen dargestellten bevorzugten Ausführungsbeispiele näher erläutert und beschrieben.

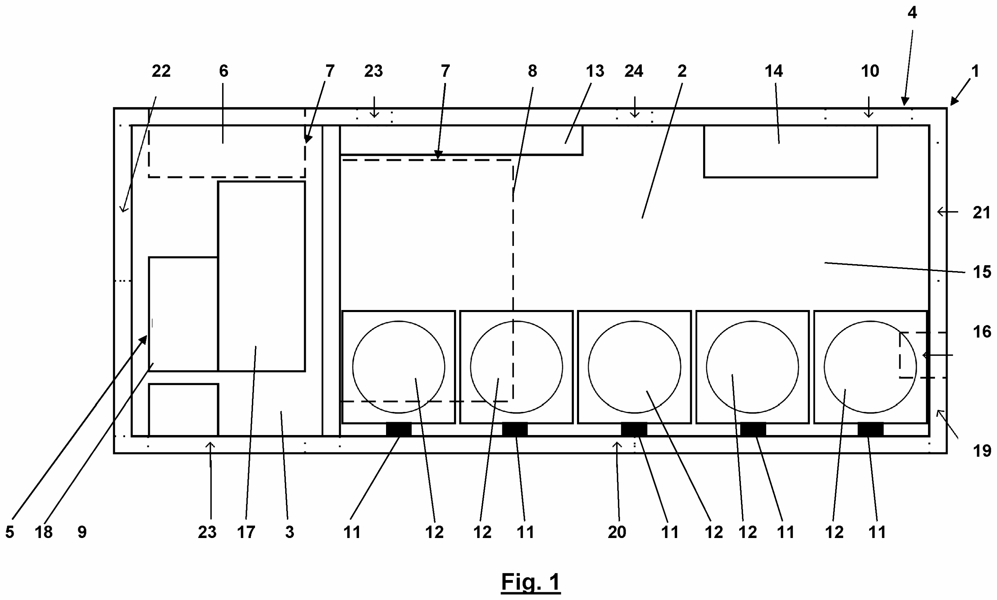

- **Fig. 1**: ist ein schematischer Aufbau der mobilen Wasserstoffperoxid-Versorgungseinheit der vorliegenden Erfindung.

### BESCHREIBUNG DER ZEICHNUNGEN

Wie bereits erwähnt, ist Wasserstoffperoxid ein vielversprechender grüner Raketentreibstoff für zukünftige Raumfahrtanwendungen. Es ist eine klare, wasserlösliche Flüssigkeit und hat eine Reihe von vorteilhaften Eigenschaften für den Einsatz als Raketentreibstoff:
- Hoher spezifischer Volumenimpuls:
   Die hohe Dichte von Wasserstoffperoxid (1,45 g/cm³ bei 20 °C) ermöglicht die Verwendung kleiner Tanks und damit die Realisierung kompakter Treibstoffsysteme und Raketenstufen.
- Ungiftig und nicht krebserregend:
   Die mit dem Umgang mit Wasserstoffperoxid verbundenen Gesundheitsrisiken sind gering. Insbesondere Langzeitwirkungen und kumulative Gesundheitseffekte sind nicht vorhanden. Aufgrund der selbstinduzierten Zersetzung in Wasser und Sauerstoff besteht keine Gefahr für die Umwelt.
- Katalytisch abbaubar:
   Die katalytische Zersetzung ermöglicht den Bau von zuverlässigen, wiederzündbaren Zündsystemen oder einfachen Monopropellant-Triebwerken. Darüber hinaus eliminiert die katalytische Zündung auch die mit der Zündverzögerung verbundenen Gefahren.
- Nicht kryogen und lagerfähig:
   Wasserstoffperoxid kann unter bestimmten Bedingungen (siehe unten) über lange Zeit bei Raumtemperatur gelagert werden. Dadurch kann es in Langzeitanwendungen wie Satellitensystemen und militärischen Aufgaben eingesetzt werden.

Obwohl Wasserstoffperoxid (im Vergleich zu anderen Raketentreibstoffen) geringe Gesundheits- und Sicherheitsrisiken birgt, müssen bei der Handhabung und Lagerung einige Regeln beachtet werden. Unkontrollierte Erhitzung und Zersetzung müssen vermieden werden. Daher muss die katalytische Zersetzung unterdrückt werden, indem kompatible Baumaterialien für Tanks, Leitungen und Ventile verwendet werden. Das Flüssigkeitssystem muss vollkommen sauber sein und eine Verunreinigung mit organischen Stoffen, Fetten und Ölen sowie katalytisch aktiven Metallionen muss vermieden werden. Außerdem muss die Lagertemperatur innerhalb akzeptabler Grenzen gehalten werden und sollte überwacht werden. Eine gute Belüftung des Lagersystems wird empfohlen, um die Bildung von schädlichen oder explosiven Gasgemischen zu verhindern. Um die Einschränkungen bei der Handhabung und Lagerung von Wasserstoffperoxid an Startplätzen zu überwinden, wurde die mobile Wasserstoffperoxid-Versorgungseinheit der vorliegenden Erfindung entwickelt und gebaut, um Raketensysteme und Nutzlasten weltweit zu versorgen.

Ziel der Konstruktion war es, eine mobile Infrastruktur zu schaffen, die die komplette Wartung von druckgespeisten Raketenstufen oder Satellitensystemen mit HTP als Treibstoff ermöglicht. Sie wurde daher in drei Funktionseinheiten unterteilt: eine Wasserstoffperoxid-Lagereinheit, eine Druckversorgungseinheit und eine Treibstoffversorgungseinheit. Darüber hinaus mussten alle diese Einheiten den Transport- und Sicherheitsvorschriften entsprechen. Aus diesen Anforderungen ergaben sich einige spezifische Bedürfnisse:
- Anforderungen an den Transport
   Alle Komponenten müssen in einem einzigen 20-Fuß-Intermodalcontainer nach ISO 668 untergebracht werden.
   Der Container muss per LKW, Bahn und Schiff transportierbar sein.
   Alle internen Komponenten müssen sicher montiert und für die Transportbedingungen geschützt sein.
- Anforderungen an die Lagerung
   Die Lagereinheit des Containers muss temperaturkontrolliert und isoliert sein, um die richtigen Lagerbedingungen für HTP zu gewährleisten, auch unter extremen Umweltbedingungen.
   Die Lagereinheit muss mit einem aktiven Belüftungssystem ausgestattet sein, um den Aufbau von kritischen Gaskonzentrationen zu verhindern.
   Der Behälter muss eine separate Zugangstür für das Personal haben, um einen Fluchtweg für lokale Arbeiten innerhalb der Lagereinheit zu schaffen.
   Die Lagereinheit muss über Einrichtungen für die sichere Langzeitlagerung von HTP verfügen.
- Druckanforderungen
   Der Behälter muss mit einem leistungsstarken Kompressorsystem ausgestattet sein, das einen Ausgangsdruck von mindestens 600 bar liefern kann.
   Um Verunreinigungen zu vermeiden, muss das Drucksystem von der Lagereinheit getrennt sein.
   Das Drucksystem muss eine vollständige Fernüberwachung und -steuerung ermöglichen.
- Anforderungen an die Betankung
   Der Behälter muss mit einer leistungsstarken und sicheren Dosierpumpe ausgestattet sein, die eine genaue Befüllung über eine Entfernung von bis zu 150 Metern ermöglicht. Das Gewicht jedes Lagerfasses muss überwacht werden, um eine zweifache Kontrolle der Tankfüllung zu ermöglichen.
   Das Betankungssystem muss eine vollständige Fernüberwachung und -steuerung ermöglichen.
   Der Behälter muss über ein System zur Versorgung mit hochreinem Wasser für die Reinigung aller Komponenten des Treibstoffsystems (einschließlich der Tanks und anderer Komponenten des Treibstoffsystems innerhalb der Raketenstufe oder der Nutzlast) verfügen.
   Eine integrierte Notdusche mit der erforderlichen Wasserversorgung ist für sichere Betankungs- und Handhabungsvorgänge erforderlich.

Um diese Anforderungen zu erfüllen, wurden mehrere mögliche Konstruktionen vorgeschlagen und diskutiert. Die mobile Wasserstoffperoxid-Versorgungseinheit 1 der vorliegenden Erfindung, siehe **Fig. 1****,** umfasst einen eigenen Tankraum 2 und einen Technikraum 3, die in einem Gehäuse 4 oder Container untergebracht sind. Der Tankraum 2 erfüllt alle Anforderungen an die Lagerung, Handhabung und Betankung von HTP. In dem Technikraum 3 befinden sich ein Druckversorgungssystem 5 und alle weiteren notwendigen technischen Komponenten, wie eine zentrale Stromversorgung (nicht dargestellt), die Steuerung (nicht dargestellt) und ein externer Teil 6 einer Klimaanlage 7, deren interner Teil 8 sich in dem Tankraum 2 befindet. In dem Technikraum 3 ist eine beheizte Notduscheinrichtung 9 untergebracht, die an einem Anschluss 10 an der Außenseite des Gehäuses 4 installiert werden kann.

Der Tankraum 2 erfüllt alle Anforderungen an den sicheren Transport, die Lagerung und die Betankung von HTP bis zu 1100 Litern. Er ist mit fünf Montagepunkten 11 für zertifizierte 220-Liter-Peroxid-Transport- und -Lagerfässer 12 einschließlich einzelner Fasswaagen und Temperatursensoren (nicht abgebildet) ausgestattet. Jeder Montagepunkt 11 verfügt über einen Wasserstoffperoxid-Eingang, an den das jeweilige Wasserstoffperoxid-Transport- und -Lagerfass 12 fluidisch angeschlossen werden kann. Der Tankraum 2 ist vollständig mit Wasserstoffperoxidverträglichen Edelstahlelementen (nicht gesondert abgebildet) ausgekleidet. Ein Reinstwassersystem 13 mit einer Leistung von bis zu 1000 Litern pro Stunde sowie eine Dosierpumpe 14 mit einer Leistung von bis zu 500 Litern pro Stunde bei einer Förderdistanz von bis zu 150 Metern kombiniert mit einer Gesamtförderhöhe von 10 Metern sind ebenfalls integriert.

Ein an die Wasserstoffperoxid-Eingänge der Montagepunkte 11 angeschlossenes und die Dosierpumpe 14 umfassendes Betankungssystem wird ferngesteuert und der gesamte Tankraum ist mit einer Auffangwanne 15 als Maßnahme gegen unerwünschte Leckagen ausgestattet.

Der Tankraum 2 wird durch die heizungsversorgte Klimaanlage 7 und ein Belüftungssystem (nicht abgebildet) temperiert, das die Konzentration des gasförmigen Wasserstoffperoxids regelt, um kritische, explosionsgefährdete Gasgemische zu vermeiden. Alle Sensoren werden aus der Ferne überwacht. Darüber hinaus ist ein automatisches optisches und akustisches Gefahrenwarnsystem (nicht abgebildet) installiert. Um auf die Selbstzersetzung des Peroxids zu reagieren, sind ein Notfallfässerflutungssystem (nicht abgebildet) sowie ein Druckentlastungsbereich 16 installiert. Die mobile Wasserstoffperoxid-Versorgungseinheit 1 der vorliegenden Erfindung benötigt eine externe Strom- und Wasserversorgung (beliebige Qualität).

Neben Hilfs- und Unterstützungssystemen (nicht dargestellt) ist in dem Technikraum 3 das Druckversorgungssystem 5 installiert, das aus einer zweistufigen Kompressoranordnung 17, 18 besteht, um einen Tankdruck von bis zu 1000 bar mit Inertgasen wie Stickstoff oder Helium bereitzustellen. Dazu muss das Druckmedium extern in Form eines 200- oder 300-bar-Gasspeichers bereitgestellt werden. Das Druckversorgungssystem 5 wird fernüberwacht und ferngesteuert.

Das Gehäuse 4 ist ein einzelner Intermodalcontainer von 20 Fuß Länge nach ISO 668. Es hat eine wärmeisolierte Wand 19. Der Tankraum 2 hat ein breites Sektionaltor 20 an der Breitseite des Gehäuses 4 und eine Personaltür 21 an der Schmalseite des Gehäuses 4. Der Technikraum 3 hat eine Doppeltür 22 an der anderen Schmalseite des Gehäuses 4. Außerdem verfügt das Gehäuse 4 über verschiedene Entlüftungen 23 und Öffnungen 24. Eine Wasserstoffperoxid-Versorgungsleitung (nicht dargestellt), deren Ausgabeende sich außerhalb des Gehäuses 4 befindet, kann durch die Öffnung 24 geführt werden, um die wärmeisolierte Wand 19 zu durchdringen, und sie kann über einen Wasserstoffperoxid-Ausgang mit der Dosierpumpe 14 innerhalb des Tankraums 2 fluidisch verbunden werden.

### BEZUGSZEICHENLISTE

- 1: mobile Wasserstoffperoxid-Versorgungseinheit
- 2: Tankraum
- 3: Technikraum
- 4: Gehäuse
- 5: Druckversorgungssystem
- 6: externer Teil
- 7: Klimaanlage
- 8: interner Teil
- 9: Notduscheneinrichtung
- 10: Anschluss
- 11: Montagepunkt
- 12: Wasserstoffperoxid-Transport- und -Lagerfass
- 13: Reinstwassersystem
- 14: Dosierpumpe
- 15: Auffangwanne
- 16: Druckentlastungsbereich
- 17: Stufe des Druckversorgungssystems 5
- 18: Stufe des Druckversorgungssystems 5
- 19: wärmeisolierte Wand
- 20: Sektionaltor
- 21: Personaltür
- 22: Doppeltür
- 23: Entlüftung
- 24: Öffnung

## Patentansprüche

1. Mobile Wasserstoffperoxid-Versorgungseinheit (1) mit
- einem Gehäuse (4),
- einem in dem Gehäuse (4) enthaltenen Tankraum (2), der mit Wasserstoffperoxid-kompatiblen Edelstahlelementen ausgekleidet ist,
- mindestens einem Montagepunkt (11) für ein Wasserstoffperoxid-Transport- und -Lagerfass (12) innerhalb des Tankraums (2),
- einer in dem Tankraum (2) befindlichen Dosierpumpe (14), die fluidisch zwischen einem Wasserstoffperoxid-Eingang des mindestens einen Montagepunkts (11), an den das Wasserstoffperoxid-Transport- und -Lagerfass (12) fluidisch anschließbar ist, und einem Wasserstoffperoxid-Ausgang, an den eine Wasserstoffperoxid-Versorgungsleitung fluidisch anschließbar ist, deren Ausgabeende sich außerhalb des Gehäuses (4) befindet, angeschlossen ist, und
- einer in dem Tankraum (2) befindlichen Reinstwasserquelle, die mit dem Wasserstoffperoxid-Eingang und/oder der Dosierpumpe (14) und/oder dem Wasserstoffperoxid-Ausgang und/oder der Wasserstoffperoxid-Versorgungsleitung fluidisch verbunden oder verbindbar ist.

2. Mobile Wasserstoffperoxid-Versorgungseinheit (1) nach Anspruch 1, **wobei** sich innerhalb des Tankraums (2) 3 bis 8 oder 4 bis 6 Montagepunkte (11) für Wasserstoffperoxid-Transport- und Lagerfässer (12), optional für zertifizierte 220-Liter-Peroxid-Transport- und Lagerfässer (12), befinden.

3. Mobile Wasserstoffperoxid-Versorgungseinheit (1) nach Anspruch 2, **wobei** jeder Montagepunkt (11) mit einem Gewichtssensor und/oder einem Temperatursensor ausgestattet ist.

4. Mobile Wasserstoffperoxid-Versorgungseinheit (1) nach einem der vorhergehenden Ansprüche, **wobei** die Reinstwasserquelle ein Reinstwassersystem (13) umfasst, das angeliefertes Wasser beliebiger Qualität zu Reinstwasser aufbereitet.

5. Mobile Wasserstoffperoxid-Versorgungseinheit (1) nach Anspruch 4, **wobei** eine maximale Kapazität des Reinstwassersystems (13) in einem Bereich von 500 Litern pro Stunde bis 2.000 Litern pro Stunde liegt.

6. Mobile Wasserstoffperoxid-Versorgungseinheit (1) nach einem der vorhergehenden Ansprüche, **wobei** die Dosierpumpe (14) eine maximale Kapazität in einem Bereich von 250 Litern pro Stunde bis 1.000 Litern pro Stunde bei einer Versorgungsstrecke durch die Wasserstoffperoxid-Versorgungsleitung von 150 Metern mit einer Gesamtförderhöhe von 10 Metern aufweist.

7. Mobile Wasserstoffperoxid-Versorgungseinheit (1) nach einem der vorhergehenden Ansprüche, **wobei** der Tankraum (2) durch eine Klimaanlage (7), vorzugsweise durch eine heizungsversorgte Klimaanlage, temperiert wird und/oder wobei der Tankraum (2) thermisch isoliert ist.

8. Mobile Wasserstoffperoxid-Versorgungseinheit (1) nach einem der vorhergehenden Ansprüche, **wobei** die mobile Wasserstoffperoxid-Versorgungseinheit (1) ein Belüftungssystem umfasst, das zur Regulierung einer Konzentration von gasförmigem Wasserstoffperoxid in dem Tankraum (2) konfiguriert ist, und/oder wobei die mobile Wasserstoffperoxid-Versorgungseinheit (1) ein automatisches optisches und akustisches Gefahrenwarnsystem umfasst.

9. Mobile Wasserstoffperoxid-Versorgungseinheit (1) nach einem der vorhergehenden Ansprüche, **wobei** eine Auffangwanne (15) den gesamten Boden des Tankraums (2) abdeckt und/oder wobei die mobile Wasserstoffperoxid-Versorgungseinheit (1) ein Notfallfässerflutungssystem und/oder mindestens ein Druckentlastungsventil oder einen Druckentlastungsbereich (16) in einer Wand des Gehäuses (4) aufweist.

10. Mobile Wasserstoffperoxid-Versorgungseinheit (1) nach einem der vorhergehenden Ansprüche, **wobei** die mobile Wasserstoffperoxid-Versorgungseinheit (1) Sensoren aufweist, die alle zur Fernüberwachung konfiguriert sind, und/oder die mobile Wasserstoffperoxid-Versorgungseinheit (1) ein die Dosierpumpe (14) und optionale Ventile umfassendes Betankungssystem aufweist, das zur Fernsteuerung konfiguriert ist.

11. Mobile Wasserstoffperoxid-Versorgungseinheit (1) nach einem der vorhergehenden Ansprüche, **wobei** das Gehäuse (4), das vorzugsweise als ein einzelner 20-Fuß-Intermodalcontainer gemäß ISO 668 ausgebildet ist, weiterhin einen von dem Tankraum (2) dauerhaft getrennten Technikraum (3) und ein in dem Technikraum (3) installiertes Druckversorgungssystem (5) enthält.

12. Mobile Wasserstoffperoxid-Versorgungseinheit (1) nach Anspruch 11, **wobei** das Druckversorgungssystem (5)
- eine zweistufige Kompressoranordnung (17, 18) umfasst und/oder
- so konfiguriert ist, dass es einen maximalen Tankdruck in einem Bereich von 60 bis 120 kPa mit Inertgasen bereitstellt, die extern aus einem Gasreservoir mit einem Druck in einem Bereich von 10 bis 40 kPa zugeführt werden, und/oder
- so konfiguriert ist, dass es fernüberwacht und -gesteuert wird.

13. Mobile Wasserstoffperoxid-Versorgungseinheit (1) nach Anspruch 11 oder 12, **wobei** in dem Technikraum (3) ein externer Teil (6) der oder einer Klimaanlage (7) untergebracht ist und/oder wobei in dem Technikraum (3) eine Notduscheinrichtung (9) der mobilen Wasserstoffperoxid-Versorgungseinheit (1) untergebracht ist, die zum Anschluss an die Reinstwasserquelle und zur Montage an der Außenseite des Gehäuses (4) aufbewahrt ist.

## Claims

1. Mobile hydrogen peroxide supply unit (1), comprising:
- a housing (4),
- a tank compartment (2) contained within the housing (4), the tank compartment being lined with hydrogen peroxide-compatible stainless steel elements,
- at least one mounting point (11) for a hydrogen peroxide transport and storage drum (12) within the tank compartment (2),
- a metering pump (14) located within the tank compartment (2), the metering pump being fluidically connected between a hydrogen peroxide inlet of the at least one mounting point (11), to which the hydrogen peroxide transport and storage drum (12) is fluidically connectable, and a hydrogen peroxide outlet, to which a hydrogen peroxide supply line, the discharge end of which is located outside the housing (4), is fluidically connectable, and
- a purified water source located within the tank compartment (2), the purified water source being fluidically connected or connectable to the hydrogen peroxide inlet and/or the metering pump (14) and/or the hydrogen peroxide outlet and/or the hydrogen peroxide supply line.

2. Mobile hydrogen peroxide supply unit (1) according to claim 1, wherein 3 to 8, or 4 to 6, mounting points (11) for hydrogen peroxide transport and storage drums (12), optionally for certified 220-liter peroxide transport and storage drums (12), are arranged within the tank compartment (2).

3. Mobile hydrogen peroxide supply unit (1) according to claim 2, wherein each mounting point (11) is provided with a weight sensor and/or a temperature sensor.

4. Mobile hydrogen peroxide supply unit (1) according to any one of the preceding claims, wherein the purified water source comprises a purified water system (13) configured to purify supplied water of any quality into purified water.

5. Mobile hydrogen peroxide supply unit (1) according to claim 4, wherein the purified water system (13) has a maximum capacity in a range from 500 liters per hour to 2,000 liters per hour.

6. Mobile hydrogen peroxide supply unit (1) according to any one of the preceding claims, wherein the metering pump (14) has a maximum capacity in a range from 250 liters per hour to 1,000 liters per hour for a supply distance through the hydrogen peroxide supply line of 150 meters with a total delivery head of 10 meters.

7. Mobile hydrogen peroxide supply unit (1) according to any one of the preceding claims, wherein the tank compartment (2) is temperature-controlled by an air-conditioning system (7), preferably by a heating-supplied air-conditioning system, and/or wherein the tank compartment (2) is thermally insulated.

8. Mobile hydrogen peroxide supply unit (1) according to any one of the preceding claims, wherein the mobile hydrogen peroxide supply unit (1) comprises a ventilation system configured to regulate a concentration of gaseous hydrogen peroxide within the tank compartment (2), and/or wherein the mobile hydrogen peroxide supply unit (1) comprises an automatic visual and audible hazard warning system.

9. Mobile hydrogen peroxide supply unit (1) according to any one of the preceding claims, wherein a spill containment tray (15) covers the entire floor of the tank compartment (2), and/or wherein the mobile hydrogen peroxide supply unit (1) comprises an emergency drum flooding system and/or at least one pressure relief valve or a pressure relief region (16) in a wall of the housing (4).

10. Mobile hydrogen peroxide supply unit (1) according to any one of the preceding claims, wherein the mobile hydrogen peroxide supply unit (1) comprises sensors, all of which are configured for remote monitoring, and/or wherein the mobile hydrogen peroxide supply unit (1) comprises a filling system comprising the metering pump (14) and optional valves, the filling system being configured for remote control.

11. Mobile hydrogen peroxide supply unit (1) according to any one of the preceding claims, wherein the housing (4), which is preferably configured as a single 20-foot intermodal container according to ISO 668, further contains a technical compartment (3) permanently separated from the tank compartment (2) and a pressure supply system (5) installed in the technical compartment (3).

12. Mobile hydrogen peroxide supply unit (1) according to claim 11, wherein the pressure supply system (5):
- comprises a two-stage compressor arrangement (17, 18), and/or
- is configured to provide a maximum tank pressure in a range from 60 to 120 kPa using inert gases supplied externally from a gas reservoir at a pressure in a range from 10 to 40 kPa, and/or
- is configured for remote monitoring and remote control.

13. Mobile hydrogen peroxide supply unit (1) according to claim 11 or 12, wherein an external part (6) of the air-conditioning system (7), or of an air-conditioning system (7), is accommodated in the technical compartment (3), and/or wherein an emergency shower device (9) of the mobile hydrogen peroxide supply unit (1) is accommodated in the technical compartment (3), the emergency shower device being stored for connection to the purified water source and for installation on the outside of the housing (4).

## Revendications

1. Unité mobile d'alimentation en peroxyde d'hydrogène (1) comprenant
- un boîtier (4),
- une chambre de réservoir (2) contenue dans le boîtier (4), qui est revêtue d'éléments en acier inoxydable compatibles avec le peroxyde d'hydrogène,
- au moins un point de montage (11) pour un fût de transport et de stockage de peroxyde d'hydrogène (12) à l'intérieur de la chambre de réservoir (2),
- une pompe doseuse (14) située dans la chambre de réservoir (2), qui est raccordée en fluide entre une entrée de peroxyde d'hydrogène du ou des points de montage (11), auquel le fût de transport et de stockage de peroxyde d'hydrogène (12) est raccordable en fluide, et une sortie de peroxyde d'hydrogène, à laquelle une conduite d'alimentation en peroxyde d'hydrogène est raccordable en fluide, dont l'extrémité de sortie se trouve à l'extérieur du boîtier (4), et
- une source d'eau ultrapure située dans la chambre de réservoir (2), qui est reliée en fluide ou raccordable en fluide à l'entrée de peroxyde d'hydrogène et/ou à la pompe doseuse (14) et/ou à la sortie de peroxyde d'hydrogène et/ou à la conduite d'alimentation en peroxyde d'hydrogène.

2. Unité mobile d'alimentation en peroxyde d'hydrogène (1) selon la revendication 1, **caractérisée en ce qu'**il se trouve à l'intérieur de la chambre de réservoir (2) 3 à 8 ou 4 à 6 points de montage (11) pour des fûts de transport et de stockage de peroxyde d'hydrogène (12), optionnellement pour des fûts de transport et de stockage de peroxyde certifiés de 220 litres (12).

3. Unité mobile d'alimentation en peroxyde d'hydrogène (1) selon la revendication 2, **caractérisée en ce que** chaque point de montage (11) est équipé d'un capteur de poids et/ou d'un capteur de température.

4. Unité mobile d'alimentation en peroxyde d'hydrogène (1) selon l'une quelconque des revendications précédentes, **caractérisée en ce que** la source d'eau ultrapure comprend un système d'eau ultrapure (13) qui traite l'eau livrée de toute qualité en eau ultrapure.

5. Unité mobile d'alimentation en peroxyde d'hydrogène (1) selon la revendication 4, **caractérisée en ce qu'**une capacité maximale du système d'eau ultrapure (13) se situe dans une plage de 500 litres par heure à 2 000 litres par heure.

6. Unité mobile d'alimentation en peroxyde d'hydrogène (1) selon l'une quelconque des revendications précédentes, **caractérisée en ce que** la pompe doseuse (14) présente une capacité maximale dans une plage de 250 litres par heure à 1 000 litres par heure pour un parcours d'alimentation par la conduite d'alimentation en peroxyde d'hydrogène de 150 mètres avec une hauteur totale de refoulement de 10 mètres.

7. Unité mobile d'alimentation en peroxyde d'hydrogène (1) selon l'une quelconque des revendications précédentes, **caractérisée en ce que** la chambre de réservoir (2) est tempérée par un climatiseur (7), de préférence par un climatiseur alimenté par chauffage, et/ou **en ce que** la chambre de réservoir (2) est isolée thermiquement.

8. Unité mobile d'alimentation en peroxyde d'hydrogène (1) selon l'une quelconque des revendications précédentes, **caractérisée en ce que** l'unité mobile d'alimentation en peroxyde d'hydrogène (1) comprend un système de ventilation configuré pour réguler une concentration de peroxyde d'hydrogène gazeux dans la chambre de réservoir (2), et/ou **en ce que** l'unité mobile d'alimentation en peroxyde d'hydrogène (1) comprend un système d'alerte de danger automatique optique et acoustique.

9. Unité mobile d'alimentation en peroxyde d'hydrogène (1) selon l'une quelconque des revendications précédentes, **caractérisée en ce qu'**un bac de rétention (15) recouvre l'ensemble du fond de la chambre de réservoir (2) et/ou **en ce que** l'unité mobile d'alimentation en peroxyde d'hydrogène (1) présente un système d'inondation d'urgence des fûts et/ou au moins une soupape de décharge de pression ou une zone de décharge de pression (16) dans une paroi du boîtier (4).

10. Unité mobile d'alimentation en peroxyde d'hydrogène (1) selon l'une quelconque des revendications précédentes, **caractérisée en ce que** l'unité mobile d'alimentation en peroxyde d'hydrogène (1) présente des capteurs, tous configurés pour la télésurveillance, et/ou **en ce que** l'unité mobile d'alimentation en peroxyde d'hydrogène (1) présente un système de remplissage comprenant la pompe doseuse (14) et des soupapes optionnelles, configuré pour la télécommande.

11. Unité mobile d'alimentation en peroxyde d'hydrogène (1) selon l'une quelconque des revendications précédentes, **caractérisée en ce que** le boîtier (4), qui est de préférence réalisé comme un conteneur intermodal de 20 pieds unique selon ISO 668, contient en outre un local technique (3) séparé en permanence de la chambre de réservoir (2) et un système d'alimentation en pression (5) installé dans le local technique (3).

12. Unité mobile d'alimentation en peroxyde d'hydrogène (1) selon la revendication 11, **caractérisée en ce que** le système d'alimentation en pression (5)
- comprend un agencement de compresseur à deux étages (17, 18) et/ou
- est configuré de sorte à fournir une pression du réservoir maximale dans une plage de 60 à 120 kPa avec des gaz inertes qui sont fournis de l'extérieur à partir d'un réservoir de gaz avec une pression dans une plage de 10 à 40 kPa, et/ou
- est configuré de sorte à être surveillé et commandé à distance.

13. Unité mobile d'alimentation en peroxyde d'hydrogène (1) selon la revendication 11 ou 12, **caractérisée en ce que** dans le local technique (3) est logée une partie externe (6) du ou d'un climatiseur (7) et/ou **en ce que** dans le local technique (3) est logé un dispositif de douche d'urgence (9) de l'unité mobile d'alimentation en peroxyde d'hydrogène (1), qui est stocké pour le raccordement à la source d'eau ultrapure et pour le montage à l'extérieur du boîtier (4).
